# EUROPEAN PATENT APPLICATION

(11) **EP 1 355 311 A2**
(43) Date of publication of application: **22.10.2003**
(21) Application number: 03252356.5
(22) Date of filing: 14.04.2003
(51) Int. Cl.: G11B 20/12

(54) **Information recording apparatus and information recording method**

(30) Priority: 15.04.2002 JP 2002112568
(71) Applicant: Pioneer Corporation, Meguro-ku, Tokyo (JP)
(72) Inventor: Hora, Takashi, Pioneer Corporation, Tokorozawa-shi, Saitama-ken (JP)
(74) Representative: Haley, Stephen

(57) **Abstract**

It has an HDD (306) on which data is recorded and an interface (307) for recording the data on the HDD (306). When recording the data on the HDD (306), the interface (307) records on the HDD (306) information on an RDI pack (160) required for reproducing the data by a video recording method and information on a navi-pack (41) required for reproducing the data by a video method.

## Description

The present invention relates to an information recording apparatus and an information recording method, and in particular, to the information recording apparatus and so on capable of recording information in a form which can support a plurality of formats.

In recent years, as there are provided optical disks having higher recording capacities, an optical is widely used for recording a movie or the like, and such a disk is called DVD (Digital Versatile Disk).

Among typical recording methods for recording information such as a movie (hereafter, referred to as content information) on the optical disks of high recording capacity, there are: a video method, which is compatible with a so-called playback-only DVD format; and a video recording method, which is not compatible with the playback-only DVD format. The latter allows easy editing of recorded content information, and is suitable for recording of content information on the optical disk in real time.

In typical use of a video method, content information is recorded by an authoring method for recording it independently of the real time. In this case, reproduction control information for controlling the reproduction form of the recorded information, which is referred to as navigation information in the DVD standard, is created in advance for the whole content information on another record medium such as a hard disk based on the correspondence between the two types of information. Both the created reproduction control information and the original information (content information) corresponding thereto are recorded on the optical disk by a disk-at-once method (incapable of additional recording).

In addition, a recent video method also allows recording of original information that is distributed by a television broadcast in real time rather than by the authoring method. In this case, instead of by using the disk-at-once method, the information is recorded on the optical disk by, for example, an incremental write method, which allows additional recording on a DVD-R (DVD-Recordable or a DVD capable of recording only once) and a DVD-RW (DVD-Re-Recordable or a DVD capable of recording more than once), or a restricted overwrite method, which is only capable of additional recording on the DVD-RW.

On the other hand, a video recording method (also referred to as a VR method) uses a standardized file structure to allow edition and deletion for an arbitrary unit. According to the file structure, original information distributed by a television broadcast, or the like is received and recorded on the optical disk in real time. In addition, reproduction control information or the like corresponding to the original information is created to be recorded on the optical disk as a separate file from that for the original information. For this reason, the video recording method allows easy edit of the recorded content information because of the use of the file structure. This is different from the case of the video method.

For the DVD-R, which is a DVD capable of recording, a standard using a video method are developed, while a so-called application standard using a video recording method is being developed. For the DVD-RW, a standard using a video recording method is developed in addition to a standard using a video method.

Under such circumstances, it is desirable, in view of versatility, that content information recorded by a video recording method can be reproduced by a DVD reproducing apparatus that employs a playback-only DVD format capable of reproduction by the video method.

Specifically, the video method uses a file structure that does not allow easy editing of content information (recorded information), because of the playback-only DVD format, or, in other words, for the sake of securing compatibility with other playback-only DVD formats such as the format for DVD-ROM (Read Only Memory). Thus, the video recording method is superior to the video method in terms of convenience in editing of content information. However, there is a problem that content information cannot be reproduced from a DVD to which the information is recorded, by the video recording method, by using a DVD reproducing apparatus of the playback-only DVD format with high versatility.

Therefore, to reproduce the content information recorded by the video recording method on the DVD reproducing apparatus of the playback-only DVD format standard, it is necessary that the format change from that for the video recording method to that for the video method.

Among method for the format conversion, there is a method wherein content information recorded by a video recording method is decoded once, returned to a baseband signal, and is further encoded in a recording format of a video method to be rerecorded by the video method.

However, such a method of converting a recording format had a problem that the temporally reproducing the content information requires operation time in the real time for the content information, and the deterioration of voice and image occurs through the repetition of decoding/encoding of content information by the compression/recording method for content information such as MPEG (Moving Picture Expert Group) 2 method.

The present invention has been implemented in consideration of the problems, and an object thereof is to provide a information recording apparatus and so on capable of recording information in a form which can easily support a plurality of formats without deteriorating voice, image and so on.

In one aspect of the present invention, an information recording apparatus (300) is provided with: a record medium (306) on which data is recorded; and a recording device (307, 311) which records the data on the record medium, wherein: when recording the data on the record medium, the recording device records on the record medium first reproduction control information (RDI pack) required for reproducing the data in a first format (video recording method) and second reproduction control information (navi-pack) required for reproducing the data in a second format (video method).

This information recording apparatus has the first reproduction control information required for reproducing the data in the first format and the second reproduction control information required for reproducing the data in the second format recorded on the record medium. Therefore, when duplicating, moving or reproducing the data recorded on the record medium, it is possible, whether the first format or the second format is selected, to easily and promptly duplicate, move or reproduce the data by using the first reproduction control information or the second reproduction control information. In addition, no deterioration of the data arises since encode and decode can be rendered unnecessary.

It has a first duplicating device (305, 307) and second duplicating device (305, 307) for duplicating the data recorded on the record medium (306), where the first duplicating device (305, 307) may duplicate the data in the first format (video recording method) by using the first reproduction control information (RDI pack) recorded on the record medium (306), and the second duplicating devcice (305, 307) may duplicate the data in the second format (video method) by using the second reproduction control information (navi-pack) recorded on the record medium (306).

In this case, the first duplicating device or the second duplicating device can use the first reproduction control information or the second reproduction control information recorded on the record medium as a part of duplication data, and so the data can be easily and promptly duplicated. In addition, no deterioration of the data arises since the encode and decode can be rendered unnecessary.

The first duplicating device (305, 307) and the second duplicating device (305, 307) can share the same apparatus.

The data is comprised of one or more minimum reproduction units (VOB units) common to the first format (video recording method) and the second format (video method), and the first reproduction control information (RDI pack) and the second reproduction control information (navi-pack) may be provided to each of the minimum reproduction units (VOB units) respectively.

In this case, it is possible to duplicate, move or reproduce the data by selecting the first reproduction control information or the second reproduction control information as the reproduction control information to be used while the contents included in the minimum reproduction units remain unchanged, and so duplication and so on of the data can be easily and promptly performed.

The data may be recorded on the record medium (306) according to the first format (video recording method).

In this case, it is possible, by selecting the first format when duplicating, moving or reproducing the data recorded on the record medium, to perform the duplication and so on of the data very easily.

The second reproduction control information (navi-pack) may be stored in free space (producer information) of the first reproduction control information (RDI pack) recorded on the record medium (306).

The second reproduction control information (navi-pack) may be recorded as a part of management information (management information of a hard disk) required for reading the data from the record medium.

A data format usable in common to both the first format (video recording method) and the second format (video method) may be used as the data format of the data to be recorded on the record medium (306).

In this case, there is no possibility of breaching the standard whether the first format or the second format is selected when duplicating, moving or reproducing the data recorded on the record medium. There are the data formats on resolution of images, multiple voice and so on, for instance.

An information recording method of the present invention is the information recording method for recording the data on the record medium (306), wherein the method is provided with a recording process for recording on the record medium (306) the first reproduction control information (RDI pack) required for reproducing the data in the first format (video recording method) and the second reproduction control information (navi-pack) required for reproducing the data in the second format (video method) is included.

According to this information recording method, the first reproduction control information required for reproducing the data in the first format and the second reproduction control information required for reproducing the data in the second format are recorded on the record medium. Therefore, when duplicating, moving or reproducing the data recorded on the record medium, it is possible, whether the first format or the second format is selected, to easily and promptly duplicate, move or reproduce the data by using the first reproduction control information or the second reproduction control information. In addition, no deterioration of the data arises since encode and decode can be rendered unnecessary.

It may include a duplicating process for duplicating the data in the second format (video method) by using the second reproduction control information (navi-pack) recorded on the record medium (306) by the recording process.

In this case, the second reproduction control information recorded on the record medium can be used as a part of duplication data, and so the data can be easily and promptly duplicated.

The data is comprised of one or more minimum reproduction units (VOB units) common to the first format (video recording method) and the second format (video method), and the first reproduction control information (RDI pack) and the second reproduction control information (navi-pack) may be provided to each of the minimum reproduction units (VOB units) respectively.

In this case, it is possible to duplicate, move or reproduce the data by selecting the first reproduction control information or the second reproduction control information as the reproduction control information to be used while the contents included in the minimum reproduction units remain unchanged, and so duplication and so on of the data can be easily and promptly performed.

The data may be recorded on the record medium (306) according to the first format (video recording method).

In this case, it is possible, by selecting the first format when duplicating, moving or reproducing the data recorded on the record medium, to perform the duplication and so on of the data very easily.

The second reproduction control information (navi-pack) may be stored in the free space (producer information) of the first reproduction control information (RDI pack) recorded on the record medium (306).

The second reproduction control information (navi-pack) may be recorded as a part of the management information (management information of a hard disk) required for reading the data from the record medium.

The second reproduction control information (navi-pack) may be stored on the record medium (306) as a separate file from the management information (management information of a hard disk) required for reading the data from the record medium.

The data format usable in common to both the first format (video recording method) and the second format (video method) may be used as the data format of the data to be recorded on the record medium (306).

In this case, there is no possibility of breaching the standard whether the first format or the second format is selected when duplicating, moving or reproducing the data recorded on the record medium. There are the data formats on resolution of images, multiple voice and so on, for instance.

To render the present invention easier to understand, reference marks and so on are added in parentheses to the attached drawings, but the present invention will not be limited thereby to the embodiments.

**In the Drawings;**
FIG. 1 is a drawing showing a physical recording format according to a DVD video standard (video method);
FIG. 2 is a drawing showing configuration of a GOP according to the DVD video standard (video method);
FIG. 3 is a drawing showing a physical recording format according to the DVD video standard (video method);
FIG. 4 is a drawing showing a logical format according to the DVD video standard (video method);
FIG. 5 is a drawing showing a physical format according to the DVD recording standard (video recording method);
FIG. 6 is a drawing showing a physical format according to the DVD recording standard (video recording method);
FIG. 7 is a drawing showing a physical format according to the DVD recording standard (video recording method);
FIG. 8 is a drawing showing a logical format according to the DVD recording standard (video recording method);
FIG. 9 is a drawing showing differences in the recording formats between the video method and video recording method;
FIG. 10 is a block diagram showing basic configuration of the information recording and reproducing apparatus;
FIG. 11 is a block diagram showing the configuration of an interface;
FIG. 12 is a flowchart showing operation of the information recording and reproducing apparatus;
FIG. 13 is a flowchart showing the operation of the information recording and reproducing apparatus;
FIG. 14 is a flowchart showing the operation of the information recording apparatus according to a first embodiment;
FIG. 15 is a flowchart showing the operation of the information recording apparatus according to a second embodiment;
FIG. 16 is a flowchart showing the operation of the information recording apparatus according to the second embodiment;
FIG. 17 is a flowchart showing the operation of the information recording apparatus according to a third embodiment; and
FIG. 18 is a flowchart showing the operation of the information recording apparatus according to the third embodiment.

Next, preferred embodiments of the present invention will be described based on the drawings.

The embodiments described hereafter are the embodiments in the case of applying the present invention to an information recording and reproducing apparatus for recording and reproducing images and so on.

### (I) DVD video standard

To begin with, before describing concrete embodiments, an overview will be described as to a DVD video standard of a video method and a video recording method to be supported as a recording method (hereafter, referred to as a recording format) by the information recording apparatus according to the embodiments.

### (Video method)

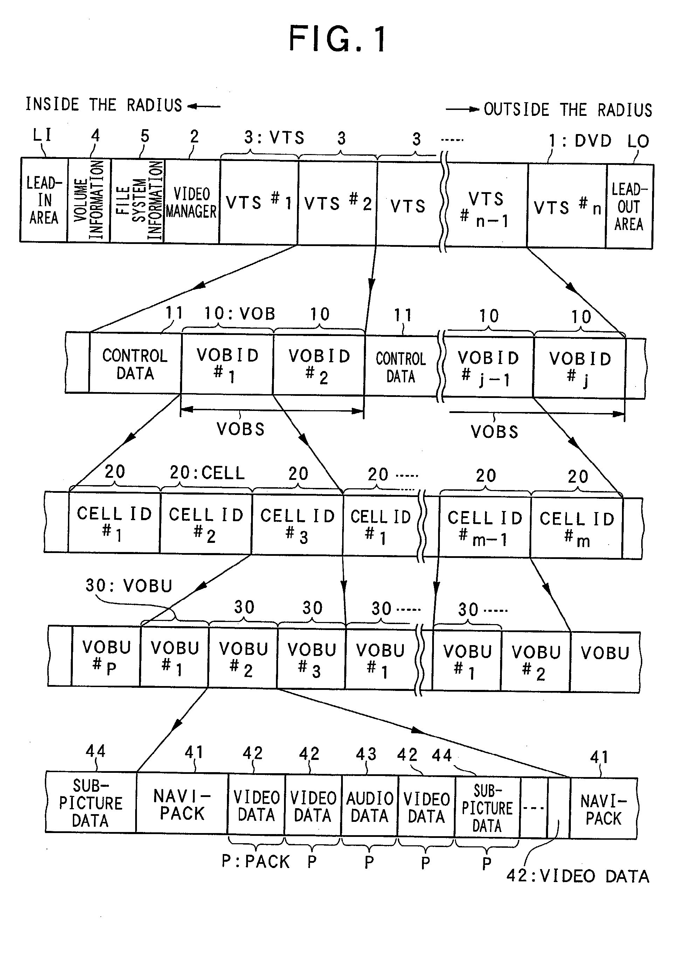

First, the DVD video standard of the video method will be described by using FIGS. 1 to 4.

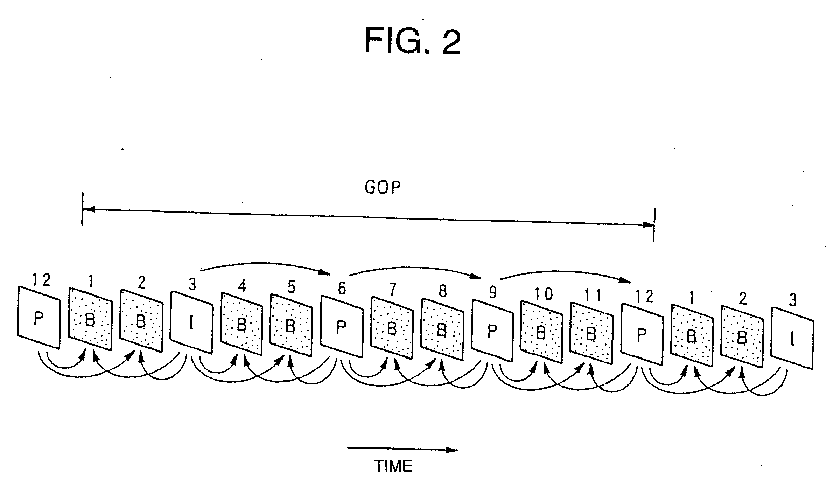

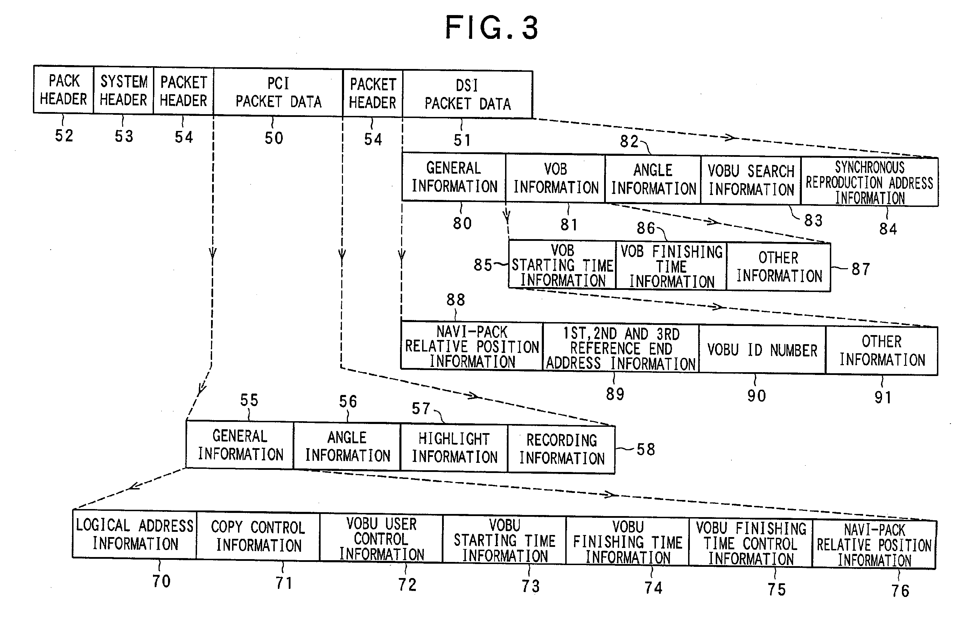

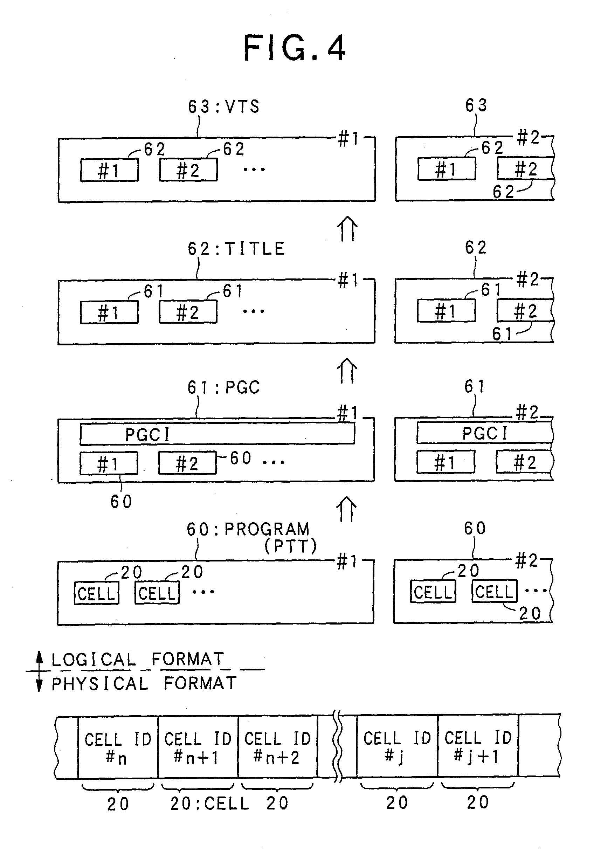

FIGS. 1 and 3 are drawings showing physical recording formats according to the video method, FIG. 2 is a drawing showing configuration of a GOP (Group of Pictures) according to the DVD video standard, and FIG. 4 is a drawing showing a logical format according to the video method.

As shown in FIG. 1, a DVD (to be more specific, a recordable DVD such as a DVD-R (DVD-Recordable) rewritable only once or a DVD-RW (DVD-Rerecordable) rewritable more than once) 1 on which recording information is recorded according to the DVD video standard has a lead-in area LI in its innermost part and has a lead-out area LO in its outermost part, and video information and audio information are recorded between them, being divided into a plurality of VTS (Video Title Set) 3 (VTS#1 to VTS#n) having ID (identification) numbers respectively.

The VTS 3 is a set (combination) collecting together related (having the same number of audio information and sub-video information (information on sub-video such as subtitles of a movie), specifications, supporting language and so on included therein) titles (single works such as movies presented to viewers by the producer). For instance, the VTS 3 has a plurality of movies having spoken lines and so on in different languages recorded as the titles of one movie respectively, or a theater version and a special version of the same movie are recorded as different titles respectively.

A video manager 2 is to be recorded immediately preceding an area in which the VTS 3 is recorded. The information to be recorded as the video manager 2 includes VMGI (Video Manager Information), and for instance, the VMGI information includes the information on the entire video and audio information recorded on the DVD 1 such as a menu showing title names, information for preventing illegal copies, an access table for accessing each title and backup information of these types of information.

In addition, volume information 4 for identifying the entire information recorded on the DVD 1 and file system information 5 for showing a file structure of the data in the video manager 2 and each VTS 3 are recorded between the video manager 2 and the lead-in area LI.

Each VTS 3 is comprised of control data 11 at its head and a plurality of objects (referred to as video objects (hereafter, referred to as VOB) in this embodiment since it is video information) 10 which are content information itself given the ID numbers respectively.

A part comprised of the plurality of VOBs 10 is called a VOB set (VOBS). As for the VOB set, in order to distinguish between the control data 11 which is the other data constituting the VTS 3 and the part of the plurality of VOBs 10 which is the substance of the video information and audio information, it is intended to identify the substantive part.

As for the control data 11 recorded at the head of each VTS 3, the information such as PGCI (Program Chain Information) which is various information on a program chain, a logical segment combining a plurality of cells mentioned later and VTSI (Video Title Set Information) which is backup information thereof are to be recorded.

Each VOB 10 is to have the substantive part (the image or voice itself except the reproduction control information) of the video information and audio information in addition to the reproduction control information recorded therein, and the content information is to be dividedly recorded in the plurality of VOBs 10.

Furthermore, each VOB 10 is comprised of a plurality of cells 20 having the ID numbers respectively, and is constituted to be complete with the plurality of cells 20.

Each cell 20 has a characteristic that it does not extend across two VOBs 10. In addition, each cell 20 is comprised of a plurality of VOB units (VOBU) 30 having the ID numbers respectively.

The VOB unit 30 indicates unit information including each of the video information, audio information and sub-video information, and each VOB unit 30 is comprised of a pack (referred to as a navigation pack, and hereafter referred to as a "navi-pack") 41 indicating navigation information storing control information for controlling the data and so on included in each VOB unit 30, video data 42 as video information, audio data 43 as audio information, and sub-picture data 44 as the sub-video information. Only the video data is recorded as the video data 42, and only the audio data is recorded as the audio data 43. In addition, only graphic data such as a character and a figure as sub-video is recorded as the sub-picture data 44.

Each VOB unit 30 is to be recorded so that reproduction time (the reproduction time corresponding to the data recorded between one navi-pack 41 and the navi-pack 41 adjacent thereto) becomes 0.4 to 1 second. For this reason, the navi-pack 41 has a characteristic that, on reproduction, it is detected without fail at least once in 0.4 to 1 second.

Furthermore, each VOB unit 30 has the navi-pack 41 placed at its head without fail and the video data 42, audio data 43 and sub-picture data 44 placed thereafter respectively. However, each of the video data 42, audio data 43 and sub-picture data 44 does not necessarily have to exist in the VOB unit 30, and if it does exist therein, it is possible to arbitrarily set the number and order thereof.

The standard stipulates that eight types of voice are recordable on the DVD 1, and thirty-two types of sub-pictures are recordable thereon.

The segments of the video data 42, audio data 43 and sub-picture data 44 are generally called packs, and the video data 42, audio data 43 and sub-picture data 44 are to be dividedly recorded in the packs in each VOB unit 30.

All the video data 42 included in each VOB unit 30 is comprised of one GOP or a plurality of GOPs (Groups of Pictures). The GOP is a minimum singly reproducible image unit prescribed by the MPEG 2 standard which is a graphical data compression method adopted for recording the video information on the DVD 1, and reproduction display time information called PTS (Presentation Time Stamp) for indicating reproduction time on a reproduction time axis for displaying the video data 42 included in the GOP is to be recorded at the head of each GOP. The MPEG 2 method will be described later.

The pack in which the video data 42 is recorded is called a video pack, the pack in which the audio data 43 is recorded is called an audio pack, and the pack in which the sub-picture data 44 is recorded is called a sub-picture pack.

Furthermore, a pack header recorded at the head of each pack has time information (equivalent to reproduction start time information of the present invention) called SCR (System Clock Reference) recorded therein. The SCR reads the data included in each pack from a track buffer in an information reproducing apparatus for reproducing the information recorded on the DVD 1, and indicates read starting time on the reproduction time axis for starting input to each buffer.

The packs normally have the video data 42, audio data 43 or sub-picture data 44 recorded in each packet which is a recording unit further segmentalizing the packs. In this embodiment, however, one pack is generally comprised of one packet.

The navi-pack 41 has DSI data which is search information for performing a search for the image or voice and so on to be reproduced and displayed (for instance, an address on the DVD 1 where the image or voice and so on to be reproduced and displayed are recorded) and PCI data which is the information on reproduction and display control for displaying the image or voice on performing a search based on the DSI data.

As for a selection item to be selected by the viewer, the PCI data includes highlight information for defining the display and operation when the item is selected by the viewer. The highlight information is instrumental in performing settings such as change in a screen display in the image displaying the items to be selected by the viewer (so-called menu screen), a display position to be changed according to the selection, and a command for the selected item (an order showing the operation to be performed for the selected item) for instance. The video information for displaying a frame, a selection button and so on required for constituting and displaying the menu screen is recorded as sub-picture data 44 which is the sub-video information. The DSI data and PCI data will be described in detail later.

Next, an overview of the MPEG 2 method for compressing the video data adopted in this embodiment will be described.

In general, in a series of frame images, the frame images before and after one frame image are often mutually similar and have a reciprocal relationship. The MPEG 2 method is a method focusing attention on this point, wherein, based on a plurality of frames to be transferred at a distance of several frames, another frame image existing between the plurality of frame images is generated by interpolating calculation based on a motion vector of an original image and so on.

In the case of recording the other frame image, it is possible, just by recording differences between it and the plurality of frame images and the information on the motion vector, to reproduce the other frame image by referring to them and estimating it from the plurality of frame images. It is thus possible to compress and record the image.

Furthermore, an overview of the GOP will be described by using FIG. 2.

FIG. 2 shows an example of the plurality of frame images constituting each GOP.

FIG. 2 shows the case where each GOP is comprised of 12 frame images (the number of frame images included in each GOP is not fixed in the MPEG 2 method), where the frame image indicated by a symbol "I" is called an I picture (intra-coded picture) which is the frame image capable of reproducing a complete frame image only with its own image.

The frame image indicated by the symbol "P" is called a P picture (Predictive-coded picture), which is an estimated image generated by a method such as decoding a difference from the estimated image compensated for and reproduced based on the I picture or another P picture already decoded.

Furthermore, the frame image indicated by the symbol "B" is called a B picture (Bidirectionally predictive-coded picture), which is the estimated image reproduced by using for estimation not only the I picture or P picture already decoded but also the I picture or P picture in the future time-wise recorded on an optical disk and so on.

FIG. 2 shows an estimated relationship (interpolating relationship) among the pictures by arrows.

The general MPEG 2 method used for the DVD 1 related to the embodiments adopts a variable rate method whereby a data amount included in each GOP is not fixed. To be more specific, each picture included in one GOP supports a fast moving motion picture so that, in the case where correlation among the pictures is weak the data amount for constituting each picture increases and so the data amount included in one GOP also increases.

In the case where each picture included in each GOP supports a rather actionless motion picture and correlation among the pictures is strong, the data amount for constituting each picture decreases and so the data amount included in each GOP also decreases.

Next, a physical data structure of the PCI data and DSI data will be described by using FIG. 3.

The PCI data and DSI data included in the navi-pack 41 are comprised of PCI packet data 50 having actual data of the PCI data, DSI packet data 51 having the actual data of the DSI data, a pack header 52 having the information such as a physical address (Pack Start Code) where the pack is recorded and SCR, a system header 53 having the physical address (System Header Start Code) where the system header of the pack is recorded and attribute information on a data stream, and each packet header 54.

As shown in FIG. 3, the PCI packet data 50 is comprised of general information 55 as a main body of PCI data 45, angle information 56 for recording the information for a multi-angle, highlight information 57 for recording menu display information displayed for selecting a multi-angle display, and recording information 58 as an ISRC (International Standard Recording Code) in compliance with the ISO (International Standardization Organization) 3901.

The ISRC indicates the information such as a country code and a contents holder code which are in a sub-code used for a CD (Compact Disc) and so on.

The general information 55 is comprised of: logical address information 70 for indicating a logical block number which is preset from the head of the VOB 10 of the navi-pack 41; copy control information 71 for indicating the information on copy protection, that is, copyright information; user control information 72 for indicating operation control of the user in the VOB unit 30; VOBU reproduction starting time information 73 for indicating a reproduction starting time on the reproduction time axis of the VOB unit 30 including the navi-pack 41; VOBU reproduction finishing time information 74 for indicating a reproduction finishing time on the reproduction time axis of the VOB unit 30; VOBU finishing time limit information 75 for indicating a reproduction finishing limit time on the reproduction time axis different from the VOBU reproduction finishing time information in the VOB unit 30; and navi-pack relative position information 76 which is relative recording address information from a first video frame of the cells to the first frame of the VOB unit 30.

The DSI packet data 51 is comprised of: general information 80 as the main body of DSI data 46; VOB information 81 which is the information on the VOB 10 to which the navi-pack 41 belongs; angle information 82 for recording the information for a multi-angle; VOBU search information 83 for indicating a recording position on the DVD 1 of another VOB unit 30 to be reproduced before or after the VOB unit 30 to which the navi-pack 41 belongs; synchronous reproduction address information 84 for indicating address information for synchronous reproduction of the video data and audio data.

The general information 80 is comprised of: navi-pack relative position information 88 for indicating the physical address of the navi-pack 41; first, second and third reference end address information 89 described later; a VOBU ID number 90 for identifying the VOB unit 30 to which the navi-pack 41 belongs; and other information 91 which is other information.

The VOB information 81 is comprised of: VOB starting time information 85 for indicating the reproduction starting time on the reproduction time axis of the VOB 10 to which the VOB unit 30 including the navi-pack 41 belongs; VOB finishing time information 86 for indicating the reproduction finishing time on the reproduction time axis of the VOB 10; and other information 87 which is the other information.

The VOBU search information 83 has a VOB unit 30 following the VOB unit 30 to which the navi-pack 41 belongs, the position information for indicating the recording position on the DVD 1 of an immediately preceding VOB unit 30, and the position information for indicating the recording position on the DVD 1 of another VOB unit 30 to be reproduced in a range of 120 seconds before to 120 seconds after the starting time of the VOB unit 30.

In the recording format of a hierarchical structure shown in FIG. 1 described above, the respective segments thereof are freely set according to the producer's intention so as to be recorded therein. It is possible to perform various and diversified types of reproduction by performing it based on a logical structure described later for each of the segments.

Next, a description will be given by using FIG. 4 as to the logical format (logical structure) combining the information recorded by the physical segments shown in FIG. 1 or FIG. 3. The logical structure shown in FIG. 4 is not the structure under which the information is actually recorded on the DVD 1, but it means that the information (access information, time information or the like) for combining and reproducing the data (cell 20 in particular) under the logical structure shown in FIG. 4 is recorded on the DVD 1, and in particular, in the control data 11.

To describe it more clearly, a description will be given from the lower layers in FIG. 4. Of the physical structures described in the above FIG. 1, one program 60 is logically constituted based on the producer's intention by selecting and combining a plurality of cells 20. The program 60 is also a minimum logical unit by which a system controller of the information reproducing apparatus can identify and access the segments by means of a command.

It is also possible for the producer to define the program 60 as the minimum unit by which the viewer can freely select and view one program 60 or a combination of a plurality of programs 60, which unit is called a PTT (Part of Title).

As one program 60 is logically constituted by selecting the plurality of cells 20, one cell 20 is used by a plurality of the programs 60. To be more specific, it is possible for the producer to have one cell 20 reproduced by a plurality of different programs 60, which is reuse of the cell 20, so to speak.

As for the number of each cell 20, it is handled as a cell ID number when handling the cell 20 in a physical format shown in FIG. 1 (indicated as a cell ID# in FIG. 1), and as a cell number in order of description in the PGCI described later when handling it in a logical format shown in FIG. 4.

As for the video method, one PGC (Program Chain) 61 is logically constituted by combining a plurality of the programs 60 based on the producer's intention. The aforementioned PGCI is defined by the unit of the PGC 61, and the PGCI includes: reproduction order of the cells 20 of each program 60 on reproducing each program 60 (a unique program number is assigned to each program 60 according to this reproduction order); an address which is the recording position of each cell 20 on the DVD 1; the number of a leading cell 20 to be reproduced in one program 60; a reproduction method of each program 60 (on recording the information on the DVD 1 according to this embodiment, it is possible, on reproduction, for the producer to select one reproduction method of normal reproduction, random reproduction [random reproduction by a random number, where the same program 60 may be reproduced more than once] and shuffle reproduction [the random reproduction by the random number as with the random reproduction, where the same program 60 is reproduced only once] and have it thereby reproduced); and various commands (commands which the producer can specify for each PGC 61 or cell 20).

The recording position of the PGCI on the DVD 1 is in the control data 11 (refer to FIG. 1) as described above. In the case where the PGCI is the one relating to the menu in the video manager 2, the recording position of the PGCI is in the control data (not shown) included in the video manager 2.

Each PGC 61 includes substantive data of the images, voice and so on as a combination of the programs 60 (in other words, as a combination of the cells 20) in addition to the PGCI.

The PGC 61 can also reuse the cell 20 (that is, to have the same cell 20 used by different PGCs 61) as described in the description of the program 60. As for the cell 20 to be used, the producer can select the method of reproducing the cells 20 irrespective of the order of storage on the DVD 1 (for instance, the method of reproducing first the cells 20 recorded later) (reproduction of noncontiguously placed cells) in addition to the method of reproducing them in order of storage on the DVD 1 (reproduction of contiguously placed cells).

The video method has one title 62 logically constituted by one PGC 61 or a plurality of PGCs 61, where the title 62 is the unit equivalent to one movie for instance, and indicates complete information which the producer intends to provide to the viewer of the DVD 1.

For this reason, one VTS 63 is logically constituted by one title 62 or a plurality of the titles 62, and the titles 62 included in the VTS 63 have common attributes respectively. For instance, different-language versions of the same movie are equivalent to the respective titles 62.

The information equivalent to one VTS 63 shown in FIG. 4 corresponds to the information included in one VTS 3 shown in FIG. 1. To be more specific, the DVD 1 has all the information logically included in the VTS 63 shown in FIG. 4 recorded as one VTS 3 thereon.

The producer specifies the information sectionalized in the physical structure based on the logical format described above so as to form the titles (movies and so on) which the viewer should see.

### [Video recording method (VR method)]

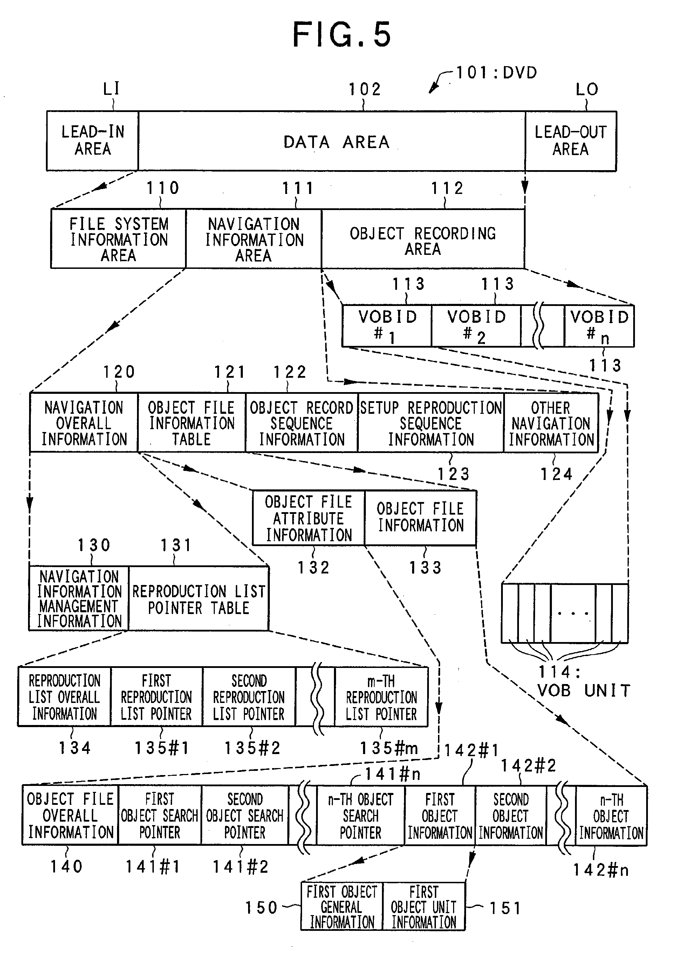

Next, the recording format in the video recording method which is a prerequisite to this embodiment will be described by using FIGS. 5 to 8.

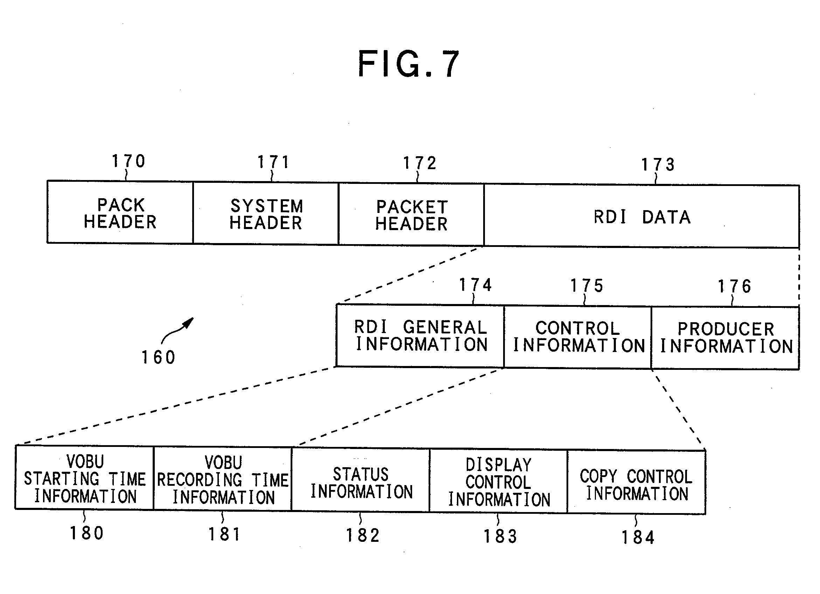

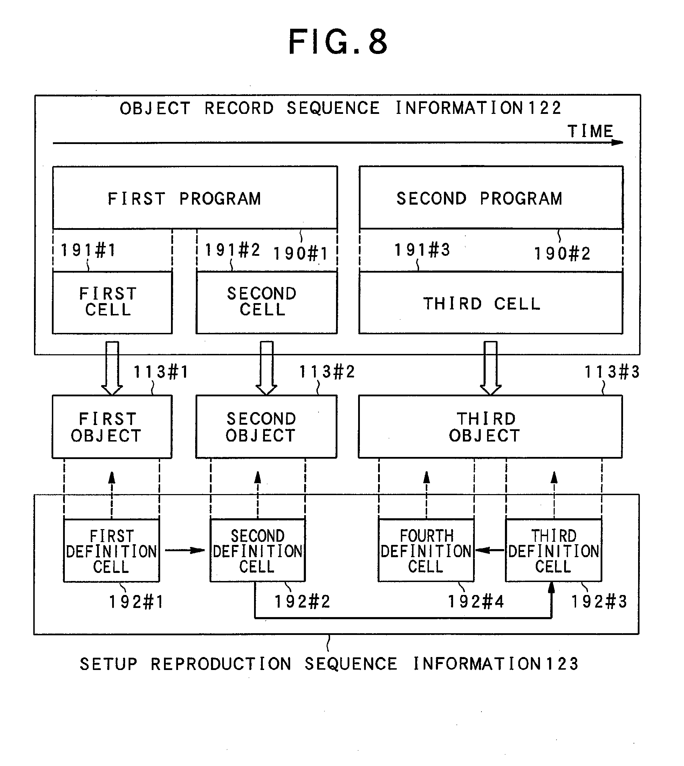

FIGS. 5 and 7 are drawings showing physical recording formats (to be more specific, the physical formats for indicating the recording positions of the content information in the DVD and so on) on the DVD after having the video information (content information) recorded thereon in compliance with each recording standard. FIG. 8 is a drawing showing a logical recording format (to be more specific, connections of various information on performing the reproduction and the recording positions of the content information to be so connected on the DVD) generated to control a reproduction form of the content information recorded on the DVD.

As shown in FIG. 5, a DVD 101 according to the recording standard has, from the inner radius side thereof, the lead-in area LI having starting information which is control information for starting the reproduction of the content information in the DVD and so on recorded therein, a data area 102 having the content information to be actually reproduced and the reproduction control information (to be more specific, the reproduction control information for indicating the reproduction order, reproduction time, recording positions on the DVD 101 and so on of the information constituting the content information) for controlling the reproduction form thereof recorded therein, and the lead-out area LO having finish information which is the control information for finishing the reproduction of the content information and so on recorded therein.

The data area 102 has a file system information area 110, a navigation information area 111 and an object recording area 112 formed therein. As for the object storage area 112, a plurality of objects (video objects (VOBs) in this case since the content information is the video information according to this embodiment) 113 which are the content information itself to be recorded are recorded therein.

Each of the VOBs 113 is to record a series of the content information for, once the recording is started, being recorded before the completion thereof. Each time the recording of the series of the content information is completed, the VOBs 113 are formed one by one in the object recording area 112.

FIG. 5 shows a state in which n pieces of the VOB 113 are given the numbers (IDs) and recorded as VOB ID#1 to VOB ID#n respectively.

According to the logical format described later, a series of the VOBs 113 for, once the recording is started, being recorded on the DVD 101 before the completion thereof is called a program, and each VOB 113 is comprised of a plurality of VOB units 114.

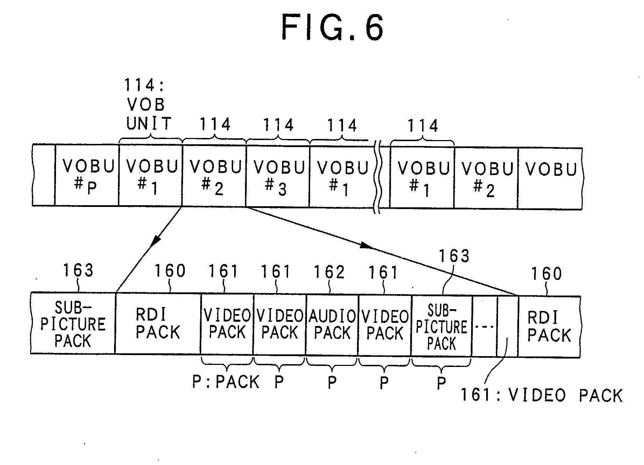

The VOB unit 114 is to be recorded as the minimum unit in edition or deletion on recording the content information. Also, as shown in FIG. 6, it has the same configuration as the data structure in the above-mentioned video method except that it has an RDI (Real-Time Data Information) pack 160 (equivalent to the reproduction form control information related to the present invention) instead of the navi-pack 41.

To be more specific, each VOB unit 114 has the RDI pack 160 placed at the head thereof without fail, and has the video data (video pack) 161, audio data (audio pack) 162 and sub-picture data (sub-picture pack) 163 placed thereafter following each RDI pack as with the video method. However, the video pack 161, audio pack 162 and sub-picture pack 163 do not always have to exist in the VOB unit 114, and even if they do exist therein, the number and order thereof can be set arbitrarily. The RDI pack will be described in detail later.

The navigation information area 111 has navigation information recorded therein, and the file system information area 110 has system information for storing the navigation information in the hierarchical structure in a so-called file format in the navigation information area 111 recorded therein.

As will be described later, the navigation information is the reproduction control information for controlling the reproduction form of the content information recorded in the object recording area 112, and is comprised of navigation overall information 120, an object file information table 121, object recording sequence information 122, setup reproduction sequence information 123 and other navigation information 124.

The navigation overall information 120 is comprised of: navigation information management information (so-called GI: General Information) 130 for managing storing positions (recording positions) of the sequence information or information tables in the navigation information area 111 therein and recording starting positions in the object recording area 112 and so on; and a reproduction list pointer table 131 for showing correspondence between the navigation information stored in the setup reproduction sequence information 123 and a reproduction list (referred to as PL: play list in each recording standard) described later.

The object file information table 121 is comprised of: object file attribute information 132 which is the types of the VOBs 113 recorded in the object recording area 112 and attribute information related to the types; and object file information 133 which is the reproduction starting time and reproduction finishing time of each VOB 113, that is, the reproduction starting time and reproduction finishing time of each VOB 113 with the head of the VOB 113 as a starting point of reckoning and the information related thereto and so on.

The object file information 133 is comprised of various information on one VOB 113 or a plurality of the VOBs 113 currently recorded on the DVD 101, that is, to be more specific, object file overall information 140 including the total number of the VOBs 113 on the DVD 101 at the present moment and so on, one (one is the number of the VOB 113 currently recorded on the DVD 101) object search pointer 141 in which the leading address information on the VOB 113 to be a search (reproduction) object in a reproduction process and so on described later is described, and one piece (that is, the same number as the object search pointer 141) of object information 142 in which the address information indicating the leading recording position of each VOB 113 on the DVD 101 and so on are described.

Each piece of the object information 142 is comprised of: object general information 150 which is the reproduction starting time and reproduction finishing time of each VOB 113 and the information related thereto; and object unit information 151 which is the information such as the reproduction time, a recording starting address or a size of the VOBU 114 constituting each VOB 113.

The object recording sequence information 122 is called an original program chain (ORG-PGC) according to each recording standard, which is the information for collectively showing a recording sequence of each VOB 113, that is, what content information was recorded in what order as a corresponding VOB 113 on the DVD 101 at initial recording thereof.

The object file information table 121 and object recording sequence information 122 are newly generated, updated and recorded each time a new VOB 113 is recorded on the DVD 101. With such information, the user can reproduce them exactly in the same order and reproduction time as when each VOB 113 was recorded.

The setup reproduction sequence information 123 is called a user defined program chain (UD-PGC) according to each recording standard, which is reproduction procedure information generated and recorded by one piece or a plurality of pieces by the user after recording each VOB 113 for the sake of logically reproducing all or a part of the recorded VOBs 113 in mutually free and unique combination, and is the reproduction procedure information to be given a number each time the user newly sets it. For this reason, the one user defined program chain is associated with one reproduction list described above.

The other navigation information 124 is comprised of the information necessary for reproduction control other than the above-described navigation information.

The reproduction list pointer table 131 has pointer information for indicating a correspondence between the number or numbers of one or a plurality of the setup reproduction sequence information 123 currently recorded on the DVD 101 and the numbers of the reproduction lists set up by the user recorded therein. To be more specific, it is comprised of reproduction list overall information 134 including a current total number of the pointer information on the DVD 101 and a final address of an area on the DVD 101 in which the reproduction list pointer table 131 is recorded and so on, and first to m-th reproduction list pointers 135 for indicating the numbers of the setup reproduction sequence information 123 associated with the first to m-th reproduction lists set up by the user respectively of the above setup reproduction sequence information 123.

Next, the data structure of the RDI pack 160 will be described by using FIG. 7.

As shown in FIG. 7, the RDI pack 160 is comprised of a pack header 170 having the information such as the physical address (Pack Start Code) at which the pack is recorded, SCR and so on, a system header 171 and packet header 172 having the physical address (System Header Start Code) at which the system header of the pack is recorded and attribute information on the data stream, and RDI data 173 for indicating actual data of the RDI.

The RDI data 173 is comprised of RDI general information 174 having the time information in the VOB unit 114, display control information (DCI) for indicating control information on displaying the VOB unit 114, control information 175 having copy control information (CCI) for indicating whether or not it is copiable, and producer information 176 which is the information arbitrarily written by the producer of the disk.

The RDI general information 174 is comprised of VOBU reproduction starting time information 180 for indicating the reproduction starting time on the reproduction time axis of the VOB unit 114 including the RDI pack 160, and VOBU recording time information 181 for indicating the recording time of the RDI pack 160, and the control information 175 is comprised of status information 182 for indicating whether or not there are the display control information and copy control information, actual display control information 183 and copy control information 184.

In the recording format of the hierarchical structure shown in FIG. 5 described above, the respective segments are intended to have the recording performed along an actual time axis. The reproduction is performed based on the logical structure described later for each of the segments so that the data can be deleted and edited for each VOB unit 114.

Next, a description will be given by using FIG. 8 as to the logical format for logically controlling the reproduction form (that is, the reproduction order or the range of the content information to be reproduced thereof) for reproducing the content information having the above-mentioned physical format and recorded on the DVD 101.

While FIG. 8 hierarchically shows the logical format, the content information on the DVD 101 is consistently recorded in the form shown in FIG. 5 if considered physically. As described above, the logical format is obtained as a result of describing the range and reproduction order of the content information to be reproduced with the hierarchical structure by using the navigation information.

First, the logical format of the object recording sequence information 122 will be described.

As described above, the object recording sequence information 122 is the information for indicating the recording sequence of each object. In the case of reproducing the VOBs 113 based on the object recording sequence information 122, the user is only allowed to reproduce them in the order in which they were recorded, and so the reproduction form is only one type.

To be more specific, in the case shown in FIG. 8, a first program (as described above, a program is equivalent to a series of objects for, once the recording is started, being recorded on the DVD 101 before the completion thereof) 190#1 is recorded earlier than a second program 190#2. In this case, the reproduction order which can be set up as the object recording sequence information 122 is only the order from the first program 190#1 to the second program 190#2.

Next, each program 190 is logically comprised of one cell 191 or a plurality of cells 191. Here, the cells 191 are all or a part of the program 190, and according to the standard, the content information should be contiguous in one cell 191. To be more specific, each program 190 is comprised of one or more cells 191.

For instance, in the case where a one-hour broadcast program is recorded as the VOB 113 on the DVD 101, if as-is, one program 190#3 is comprised of only one cell 191#3 just like the second program 190 and third cell 191 in FIG. 8.

In the case where, after the recording, the object recording sequence information 122 is set up to render a part of the formed program 190 irreproducible and thereby divide the program 190 between before and after the part (for instance, in the case of deleting rendering irreproducible the VOB 113 equivalent to a commercial period during the broadcast program), it is only prescribed that only the cell 191 should be divided before and after the part to be irreproducible according to the current recording standard (refer to the first program 190#1, first cell 191#1 and second cell 191#2 in FIG. 8).

Normally, as for the relationship between each cell 191 logically constituted and each VOB 113 physically formed, each cell 191 is associated with one VOB 113 as shown in FIG. 8. Therefore, if one cell 191 is deleted on the object recording sequence information 122, a corresponding VOB 113 also becomes irreproducible.

Next, the logical format of the setup reproduction sequence information 123 will be described.

As described above, the setup reproduction sequence information 123 (user defined program chain) is also called a reproduction list according to the recording standards, and is arbitrarily set up and recorded by the user in order to reproduce a part or all of a plurality of the VOBs 113 in arbitrary order. Therefore, the program 190 described above does not exist in the setup reproduction sequence information 123, and furthermore, it is possible to set more than one piece of the setup reproduction sequence information 123.

As shown in FIG. 8, the setup reproduction sequence information 123 is logically comprised of one definition cell 192 (also referred to as a logical cell) or a plurality of definition cells 192. Each definition cell 192 is the information for logically indicating reproduction sections arbitrarily set up by the user (reproduction sections as a part of each VOB 113) and the reproduction order of the reproduction sections, and is set up so as to be reproduced while referring to each VOB 113. This is ingenuity in the standards for the sake of realizing a plurality of types of reproduction forms with as little change in the original VOB 113 as possible.

To be more specific, as shown in FIG. 8, one piece of the setup reproduction sequence information 123 is constituted, for instance, by logically setting up a first definition cell 192#1 for specifying a part of a first VOB 113#1 as a reproduction section, a second definition cell 192#2 for specifying a part of a second VOB 113#2 as a reproduction section, a third definition cell 192#3 and fourth definition cell 192#4 for specifying different parts of a third VOB 113#3 as reproduction sections respectively and defining them to be reproduced in order of the first definition cell 192#1 → second definition cell 192#2 → third definition cell 192#3 → fourth definition cell 192#4.

In the case where two or more definition cells 192 are set up for each VOB 113, a part of the VOB 113 may be used in common by a plurality of the definition cells 192.

The content information to be seen by the viewer is formed by specifying the segments recorded along actual time in a physical structure based on the logical format described above.

### [Differences between the two methods]

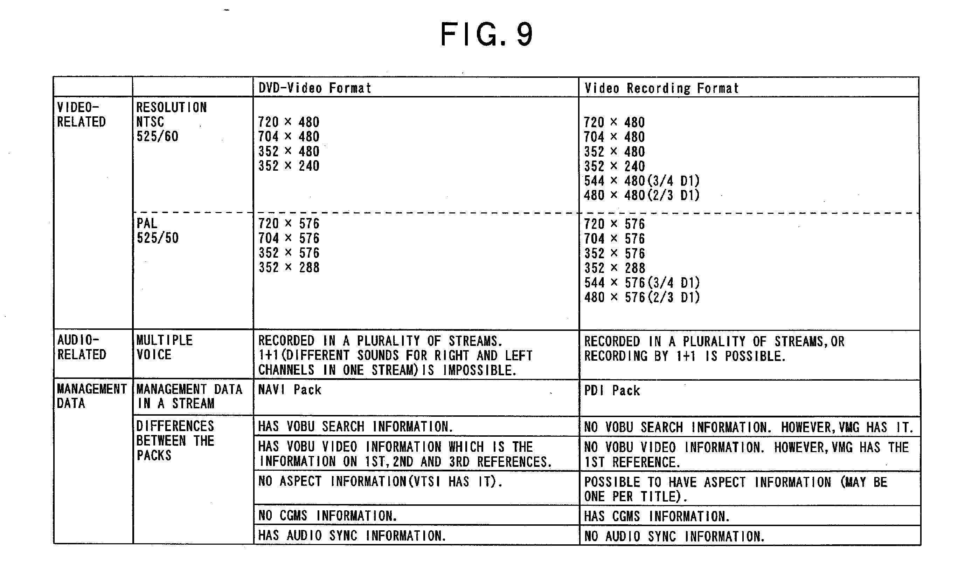

Next, a description will be given by referring FIG. 9 as to the differences in the recording formats between the video method and video recording method.

As shown in FIG. 9, as to the video data, there are differences in the recording formats between the two methods in terms of resolution of the images. For instance, in the case of the NTSC method, four types of resolution of 720 × 480 dots, 704 × 480 dots, 352 × 480 dots and 352 × 240 dots can be used in common to both methods. However, as for 544 × 480 dots and 480 × 480 dots corresponding to the cases of changing an aspect ratio of the image, they can be used only by the video recording method and not by the video method. As for the PAL method, four types of resolution of 720 × 576 dots, 704 × 576 dots, 352 × 576 dots and 352 × 288 dots can be used in common to both methods. However, as for 544 × 576 dots and 480 × 576 dots corresponding to the cases of changing the aspect ratio of the image, they can be used only by the video recording method and not by the video method.

As for the recording method of multiple voice, the video method can record the voice in a plurality of streams but cannot record a plurality of audio data (for instance, two different sounds for right and left channels) in one stream. As for the video recording method, it can record the voice in the plurality of streams and also record the plurality of audio data in one stream.

As for the contents of management data, there are mutual differences since the video method defines the navi-pack 41 and the video recording method defines the RDI pack 160 as the management data respectively.

For instance, as described above, the navi-pack 41 has the VOBU search information 83 including the position information for indicating the recording positions on the DVD 1 of the VOB units 30 following and immediately preceding the VOB unit 30 to which the navi-pack 41 belongs. However, the RDI pack 160 does not include any information equivalent to the VOBU search information 83, and the information equivalent to the VOBU search information 83 is included in the navigation information management information 130.

As described above, as to each GOP constituting the video data 42 of the VOB unit 30, the first, second and third reference end address information 89 of the navi-pack 41 includes the end address information on a first (1st) reference for indicating the I picture, end address information on a second (2nd) reference for indicating a first P picture positioned following the I picture, and end address information on a third (3rd) reference for indicating a next P picture positioned following the P picture defined as the second reference (FIG. 8). The RDI pack 160 does not include the end address information on the first (1st), second (2nd) and third (3rd) references. However, the end address information on the first (1st) reference is included in the navigation information management information 130.

Furthermore, the navi-pack 41 does not include aspect information for prescribing the aspect ratio of the image, and this information is included in the control data 11. On the other hand, the display control information 183 of the RDI pack 160 (FIG. 7) includes the aspect information therein. While the navi-pack 41 does not include the copy control information for indicating copy permission, prohibition and so on, the RDI pack 160 includes the copy control information 184 as described above. Furthermore, the navi-pack 41 includes the synchronous reproduction address information 84, but the RDI pack 160 does not include such information.

### [Information reproducing apparatus]

### - First embodiment -

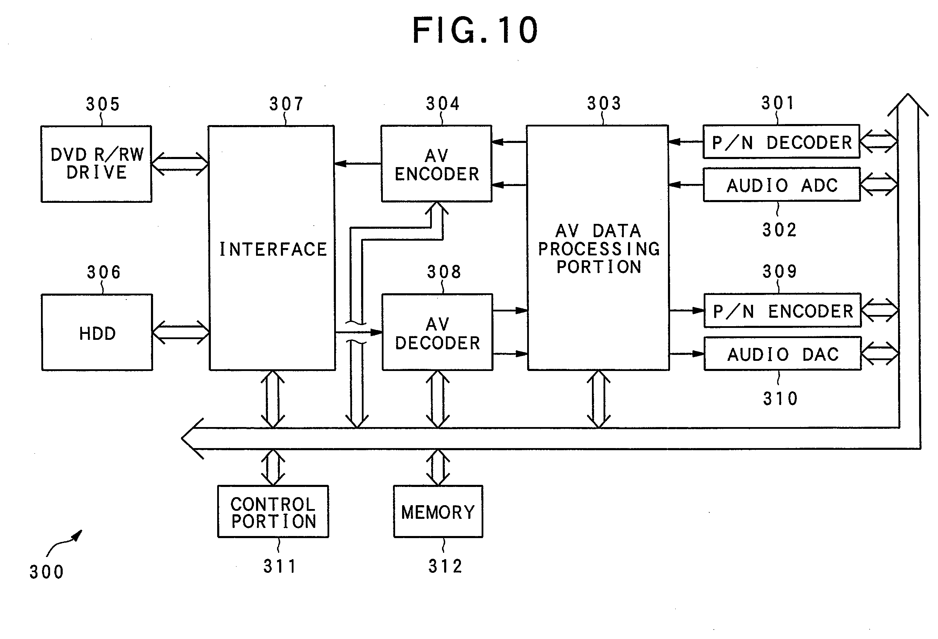

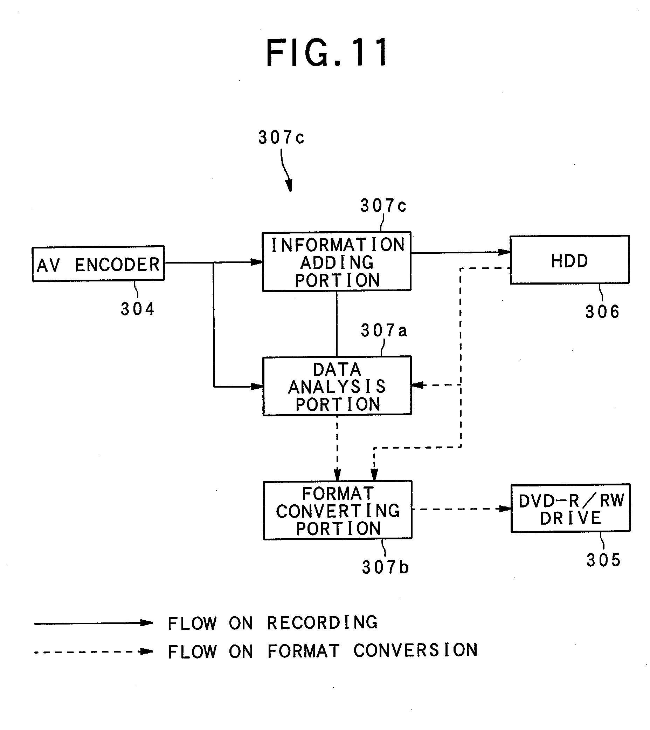

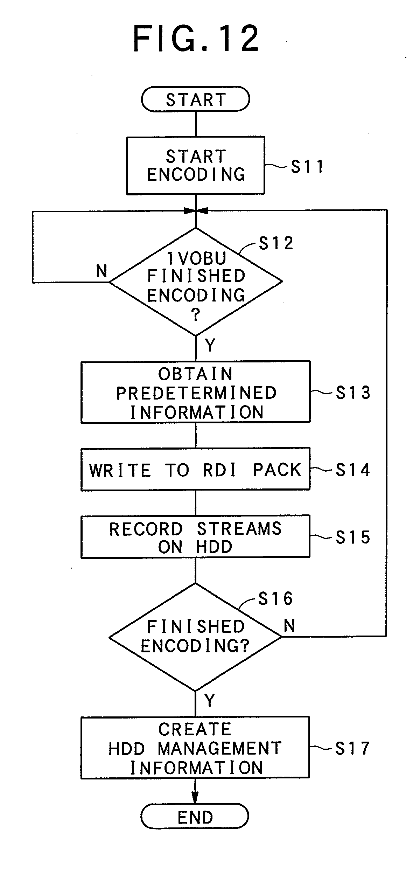

Hereafter, a description will be given by referring FIGS. 10 to 14 as to an information recording and reproducing apparatus which is a first embodiment of the information recording apparatus of the present invention. FIG. 10 is a block diagram showing basic configuration of the information recording and reproducing apparatus, FIG. 11 is a block diagram showing configuration of an interface, and FIGS. 12 to 14 are flowcharts showing operation of the information recording and reproducing apparatus.

An information recording and reproducing apparatus 300 shown in FIG. 10 has: a P/N decoder 301 for converting a PAL signal or an NTSC signal which is video information into a digital signal; an audio A/D converter (hereafter, referred to as an audio ADC) 302 for rendering audio data of an analog signal as digital data; an AV data processing portion 303 for processing general images and voice converted into the digital signals; an AV encoder 304 for encoding the AV data (video data or audio data converted into the digital signal(hereafter, merely referred to as AV data)) onto data in the form of a recording method which is the video method or video recording method; a DVD-R/RW drive 305 for storing an unshown DVD and recording and reproducing the AV data; a hard disk drive (hereafter, referred to as an HDD) 306 for recording and reproducing the AV data; an interface 307 for performing control on reading and writing the AV data to the DVD-R/RW drive 305 and HDD 306; an AV decoder 308 for decoding data in the form of the recording method which is the video method or video recording method onto the AV data; a P/N encoder 309 for converting the video information which is the digital signal into the PAL signal or NTSC signal which is the analog signal; a audio D/A converter (hereafter, referred to as an audio DAC) 310 for converting audio data which is the digital signal into analog data; a control portion 311 for controlling each portion; and a memory 312 used for operation of each portion.

The P/N decoder 301 has the PAL signal or NTSC signal which is the analog signal outputted from an unshown TV tuner or the like inputted thereto. The P/N decoder 301 converts the inputted PAL signal or NTSC signal into the digital signal and outputs it to the AV data processing portion 303.

The audio ADC 302 has the audio data which is the analog signal outputted from the unshown TV tuner or the like inputted thereto as with the P/N decoder 301. The audio ADC 302 converts the inputted audio data into the digital signal and outputs it to the AV data processing portion 303.

The AV data processing portion 303 has the video data or audio data (AV data) converted into the digital signal inputted thereto. The AV data processing portion 303 outputs the inputted AV data to the P/N encoder 309 and the audio DAC 310, and also performs path switching such as switching of the data to the AV encoder 304 and general video and audio processing on a baseband signal such as graphic processing of the video data and OSD (On Screen Display) processing.

The AV encoder 304 has the AV data which is AV-processed inputted thereto. The AV encoder 304 encodes the inputted AV data onto data in the form of the above-mentioned recording method which is the video method or video recording method, and outputs the encoded AV data to the DVD-R/RW drive 305 and HDD 306 via the interface 307.

The interface 307 performs an interface process on recording the AV data on the DVD-R/RW drive 305 and HDD 306, and also controls the DVD-R/RW drive 305 and HDD 306 based on the control of the control portion 311 on recording and reproducing the AV data.

The interface 307 also has a function of converting the format of the data inputted from the AV encoder 304 into the format for recording on the HDD 306, which function will be described later.

The AV decoder 308 decodes the AV data, which is encoded onto the video method, video recording method or recording method for the hard disk, onto the digital data and outputs the decoded AV data to the AV data processing portion 303.

The P/N encoder 309 receives the PAL signal or NTSC signal which is the digital signal outputted from the AV data processing portion 303, and converts the PAL signal or NTSC signal into the analog signal to output it to an unshown display portion and so on.

The audio DAC 310 has the audio data which is the digital signal outputted from the AV data processing portion 303 inputted thereto as with the P/N encoder 309, and converts the inputted audio data into the analog signal to output it to the outside via an unshown power amplifying portion.

Next, FIG. 11 is a block diagram showing the configuration of a format converting apparatus 307A provided to the interface 307. The format converting apparatus 307A has a data analysis portion 307a for analyzing the data recorded by the video method or video recording method inputted from the AV encoder 304 or the DVD-R/RW drive 305, a format converting portion 307b for converting the data from the AV encoder 304 or the DVD-R/RW drive 305 into data in the form of the video recording method based on analysis results in the data analysis portion 307a, and an information adding portion 307c for creating the data of the recording format for the HDD 306 by adding the information necessary for duplication by the video method to the data outputted from the format converting portion 307b.

The format converting apparatus 307A can convert the data inputted from the HDD 306 into the data in the form of the video method or the video recording method and output it to the AV decoder 308 or the DVD-R/RW drive 305. In this case, the data analysis portion 307a analyzes the data inputted from the HDD 306, and the format converting portion 307a converts the data inputted from the HDD into the data in the form of the video method or video recording method based on the analysis results in the data analysis portion 307a.

In FIG. 11, the arrows in a solid line show a flow of the information on recording on the HDD 306 and the arrows in a dotted line show the flow of the information on converting the format of the data recorded on the HDD 306 and recording it on the DVD-RW respectively.

Next, the operation of the information recording and reproducing apparatus 300 on recording on the HDD 306 will be described by referring to FIG. 12. The process shown in FIG. 12 illustrates the case of recording the data in the form of the video method. According to this embodiment, the recording is performed by the video recording method, and the information necessary for the duplication by the video method is stored in the RDI pack 160 by the video recording method. This process is performed based on the control of the control portion 311. Hereafter, each of the steps will be described.

In a step S11 in FIG. 12, encoding (format conversion) by the format converting apparatus 307A is started. The format converting apparatus 307A has the data in the form of the video method outputted from the DVD-R/RW drive 305 inputted thereto. The inputted data is analyzed by the data analysis portion 307a, and is also converted into data in the form of the video recording method for each VOB unit 114 in the format converting portion 307b.

Next, in a step S12, it waits until the encoding is finished as to one VOB unit 114 (FIG. 6) by the format converting portion 307b and then moves on to a step S13. In the step S13, as to the VOB unit 114 of which encoding is finished, the end address information on the first (1st) reference, end address information on the second (2nd) reference, end address information on the third (3rd) reference, and address information for synchronous reproduction are obtained from the analysis results in the data analysis portion 307a. In the following step S14, each of the information obtained in the step S13 is registered with the area corresponding to the producer information 176 of the RDI pack 160 in an information adding portion 307d. Subsequently, in a step S15, a stream is written to the HDD 306 as to the VOB unit 114 of which encoding is finished and having the information added thereto. At this time, the data equivalent to the RDI pack 160 including the producer information 176 storing the information obtained in the step S13 is recorded on the HDD 306.

Thus, in the steps S14 to S15, the data is recorded on the HDD 306 in compliance with the video recording method, and each of the information necessary for the reproduction by the video method is simultaneously recorded in the area of the RDI pack 160 corresponding to the producer information 176. Thus, as described later, the processing for duplicating the data recorded on the HDD 306 in the video-method format is rendered easier and faster.

Next, in the step S16, it determines whether or not the encoding is finished as to all the VOB units 114, and if the determination is denied, it returns to the step S12 and repeats the processing of the steps S12 to 15 as to the next VOB unit 114. If the determination in the step S16 is affirmed, it moves on to a step S17 to create hard disk management information and also writes the hard disk management information to a predetermined area on the HDD 306 so as to finish the processing. The hard disk management information is the management information to be used for reading the data stored on the HDD.

In the case of recording the data recorded by the video recording method on the HDD 306, the format conversion from the video method to the video recording method in the format converting portion 307b is not performed, and only the information in the information adding portion 307d is added to each VOB unit 114.

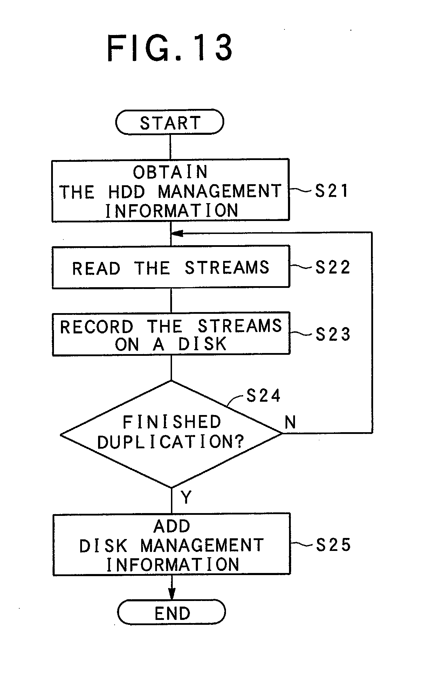

Next, a description will be given by referring FIG. 13 as to the processing in the case of duplicating the data recorded on the HDD 306 on the record medium such as the DVD-RW by the video recording method. This processing is performed based on the control of the control portion 311. Hereafter, each of the steps will be described.

In a step S21 in FIG. 13, it obtains the hard disk management information recorded on the HDD 306, and in a step S22, it reads the streams recorded on the HDD 306 based on the hard disk management information. Next, in a step S23, it records the streams read in the step S22 on the record medium such as the DVD-RW. Next, in a step S24, it determines whether or not all the streams to be duplicated have been recorded, and if the determination is denied, it returns to the step S22 and repeats the reading of the streams (step S22) and the recording of the streams (step S23). If the determination in the step S24 is affirmed, it moves on to a step S25 to additionally record the management information on the data newly duplicated this time on the record medium such as the DVD-RW so as to finish the processing.

Thus, according to this embodiment, the data is recorded on the HDD 306 in compliance with the video recording method, and so it is not necessary to convert the format in the format converting portion 307b when duplicating the data recorded on the HDD 306 on the DVD-RW or the like by the video recording method.

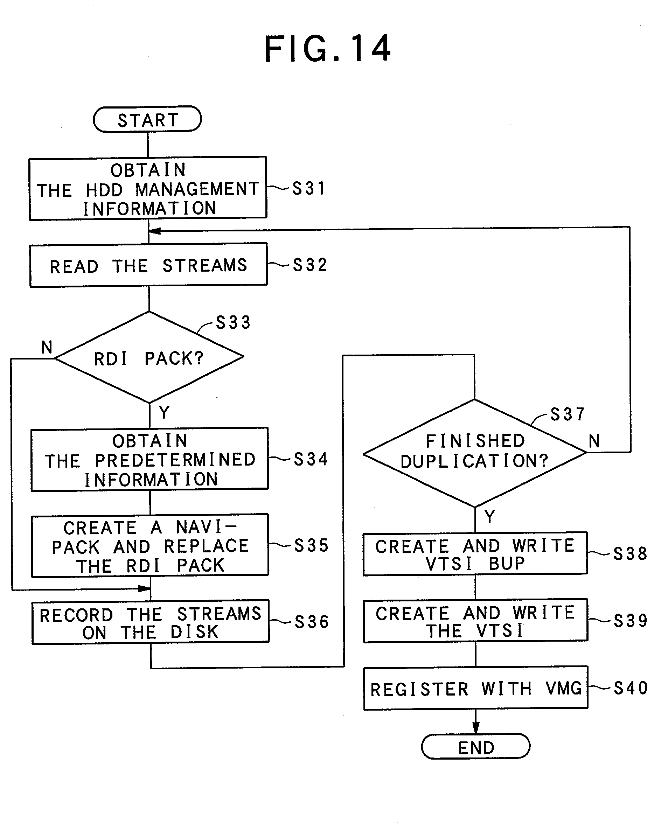

Next, a description will be given by referring FIG. 14 as to the processing in the case of duplicating the data recorded on the HDD 306 on the record medium such as the DVD-RW by the video method. This processing is performed based on the control of the control portion 311. Hereafter, each of the steps will be described.

In a step S31 in FIG. 14, in the data analysis portion 307a, it obtains the hard disk management information recorded on the HDD 306, and in a step S32, it reads the streams recorded on the HDD 306 based on the hard disk management information. Next, in a step S33, it determines whether or not the data equivalent to the RDI pack has been read, and if the determination is affirmed, it moves on to a step S34, and if the determination is denied, it moves on to a step S36.

In a step S34, in the data analysis portion 307a, it obtains the information necessary for the duplication by the video method from the area corresponding to the producer information 176 of the read RDI pack 160. This information is the information written in the step S14 (FIG. 12).

Next, in a step S35, in the format converting portion 307b, it creates the navi-pack based on the information (including the information on the area corresponding to the producer information 176) equivalent to the RDI pack 160 which has already been read so as to replace the area equivalent to the RDI pack 160 with the navi-pack.

In a step S36, it records the streams read in the step S32 or the streams including the navi-pack created in the step S35 on the record medium such as the DVD-RW. Next, in a step S37, it determines whether or not all the data to be duplicated has been duplicated, and if the determination is denied, it returns to the step S32 and repeats the steps S32 to S36 for the following streams. If the determination in the step S37 is affirmed, it moves on to a step S38.

Next, in a step S38, it creates backup data of VTSI, and records it as a part of the control data 11 (FIG. 1) on the record medium such as the DVD-RW. Next, in a step S39, it creates the VTSI, and records it as a part of the control data 11 on the record medium such as the DVD-RW. Next, in a step S40, it records the information necessary for the video manager 2 (FIG. 1) on the record medium such as the DVD-RW so as to finish the processing.

Incidentally, as described above, there are differences in the recording formats between the video method and the video recording method in terms of the resolution of the images and the recording method of the multiple voice (FIG. 9). For this reason, according to this embodiment, the recording is performed with the resolution allowed by the video method on recording the data on the HDD 306. To be more specific, in the case of the NTSC method, one of the four types of resolution of 720 × 480 dots, 704 × 480 dots, 352 × 480 dots and 352 × 240 dots is used. As for the PAL method, one of the four types of resolution of 720 × 576 dots, 704 × 576 dots, 352 × 576 dots and 352 × 288 dots is used. These resolutions are the data formats usable by both the video method and video recording method.

Furthermore, as for the recording method of the multiple voice, the multiple voice recording is not performed in the case of recording the voice in one stream. In the case where voice recording in a plurality of streams is possible, however, the voice recording in the plurality of streams is performed. These recording methods are the data formats usable by both the video method and video recording method. The data formats such as the resolution and the recording method of the multiple voice are selected by the format converting apparatus 307A.

Thus, as for the data formats such as the resolution and the recording method of the multiple voice according to this embodiment, the recording on the HDD 306 is performed by using the data formats usable by both the video method and video recording method so as to eliminate the possibility of breaching the standard on duplicating the data as to both the methods.

As described above, according to this embodiment, the information necessary for creation of the navi-pack is recorded on the HDD 306 in advance. For this reason, it is possible, when duplicating the data recorded on the HDD 306 on the DVD-RW and so on by the video method, to read the information necessary for the creation of the navi-pack from the HDD 306. Therefore, it is possible to easily and promptly duplicate the data without necessity of complicated processing as in the case of converting the format from the video recording method to the video method. In addition, the resolution and the recording method of the multiple voice are prescribed on recording on the HDD 306 so that occurrence of a breach of the standard can be prevented.

### - Second embodiment -

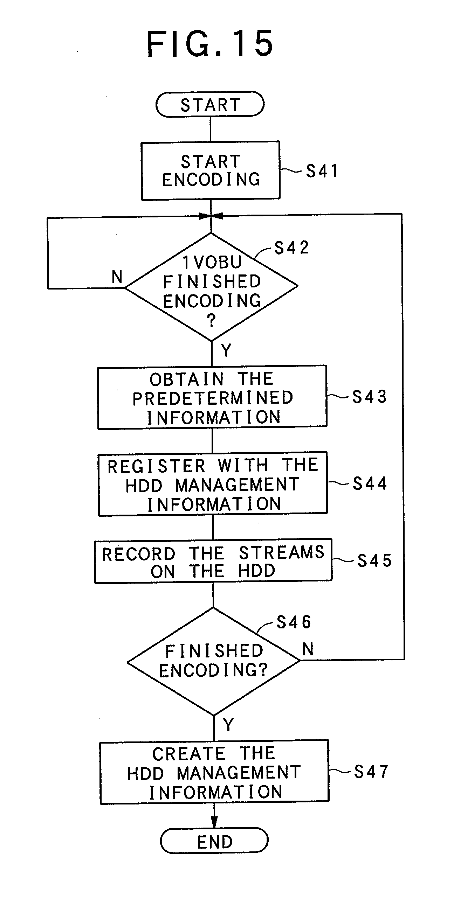

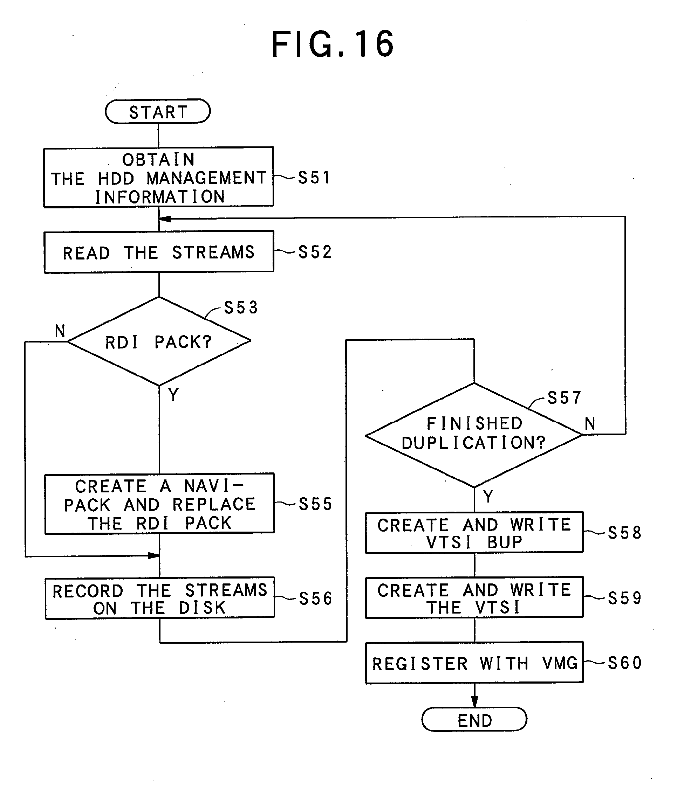

Hereafter, a description will be given by referring FIGS. 15 and 16 as to the information recording and reproducing apparatus which is a second embodiment of the information recording apparatus of the present invention. As for the second embodiment, only the portions different from the first embodiment will be described.

According to the first embodiment, the information necessary for the creation of the navi-pack is written to the area corresponding to the producer information 176 in the RDI pack 160. According to the second embodiment, however, such information is recorded as a part of the hard disk management information.

FIG. 15 is a flowchart showing the processing on recording the data on the HDD 306.

In a step S41 in FIG. 15, the encoding (format conversion) by the format converting apparatus 307A is started.

Next, in a step S42, it waits until the encoding is finished by the format converting apparatus 307A as to one VOB unit 114 (FIG. 6), and moves on to a step S43. In the step S43, it obtains the end address information on the first (1st) reference, end address information on the second (2nd) reference, end address information on the third (3rd) reference, and address information for synchronous reproduction as to the VOB unit 114 of which encoding is finished. In the following a step S44, it registers each of the information obtained in the step S43 as a part of the hard disk management information. Subsequently, in a step S45, it writes to the HDD 306 the streams as to the VOB unit 114 of which encoding is finished.

Next, in a step S46, it determines whether or not the encoding is finished as to all the VOB units 114, and if the determination is denied, it returns to the step S42 and repeats the processing of the steps S42 to 45 as to the next VOB unit 114. If the determination in the step S46 is affirmed, it moves on to a step S47 to create the hard disk management information and also writes the hard disk management information to a predetermined area on the HDD 306 so as to finish the processing. At this time, the hard disk management information is created by including each of the information obtained in the step S43 and is recorded on the HDD 306.

In the case of recording the data recorded by the video recording method on the HDD 306, the format conversion from the video method to the video recording method in the format converting portion 307b is not performed, and only the information in the information adding portion 307b is added to each VOB unit 114.

FIG. 16 is a flowchart showing the processing in the case of duplicating the data recorded on the HDD 306 on the record medium such as the DVD-RW by the video method.

In a step S51 in FIG. 16, it obtains the hard disk management information recorded on the HDD 306. Here, it also obtains each of the information necessary for the duplication by the video method. This information is the information written in the step S47 (FIG. 15). Next, in a step S52, it reads the streams recorded on the HDD 306. Next, in a step S53, it determines whether or not the data equivalent to the RDI pack has been read, and if the determination is affirmed, it moves on to a step S55, and if the determination is denied, it moves on to a step S56.

In a step S55, it creates the navi-pack based on each of the information which has already been read as a part of the hard disk management information so as to replace the area equivalent to the RDI pack 160 with the navi-pack.

In a step S56, it records the streams read in the step S52 or the streams including the navi-pack created in the step S55 on the record medium such as the DVD-RW. Next, in a step S57, it determines whether or not all the data to be duplicated has been duplicated, and if the determination is denied, it returns to the step S52 and repeats the steps S52 to S56 for the following streams. If the determination in the step S57 is affirmed, it moves on to a step S58.

Next, in a step S58, it creates backup data of VTSI, and records it as a part of the control data 11 (FIG. 1) on the record medium such as the DVD-RW. Next, in a step S59, it creates the VTSI, and records it as a part of the control data 11 on the record medium such as the DVD-RW. Next, in a step S60, it records the information necessary for the video manager 2 (FIG. 1) on the record medium such as the DVD-RW so as to finish the processing.

As described above, according to this embodiment, the information necessary for creation of the navi-pack is recorded on the HDD 306 in advance. For this reason, it is possible, when duplicating the data recorded on the HDD 306 on the DVD-RW and so on by the video method, to read the information necessary for the creation of the navi-pack from the HDD 306. Therefore, it is possible to easily and promptly duplicate the data without necessity of complicated processing as in the case of converting the format from the video recording method to the video method.

### - Third embodiment -

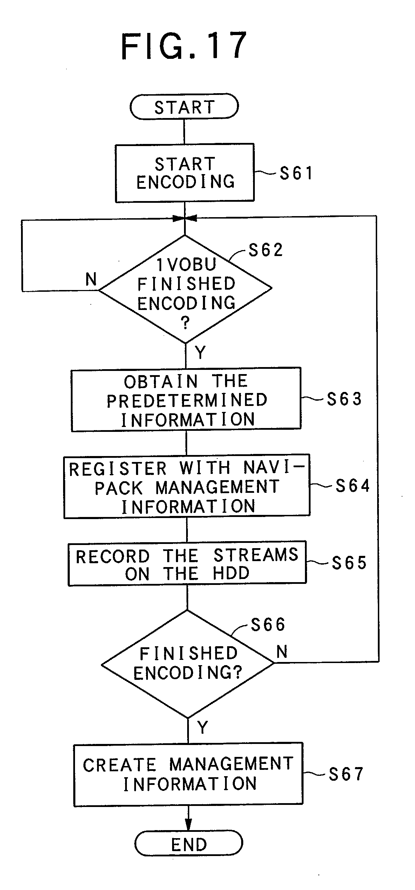

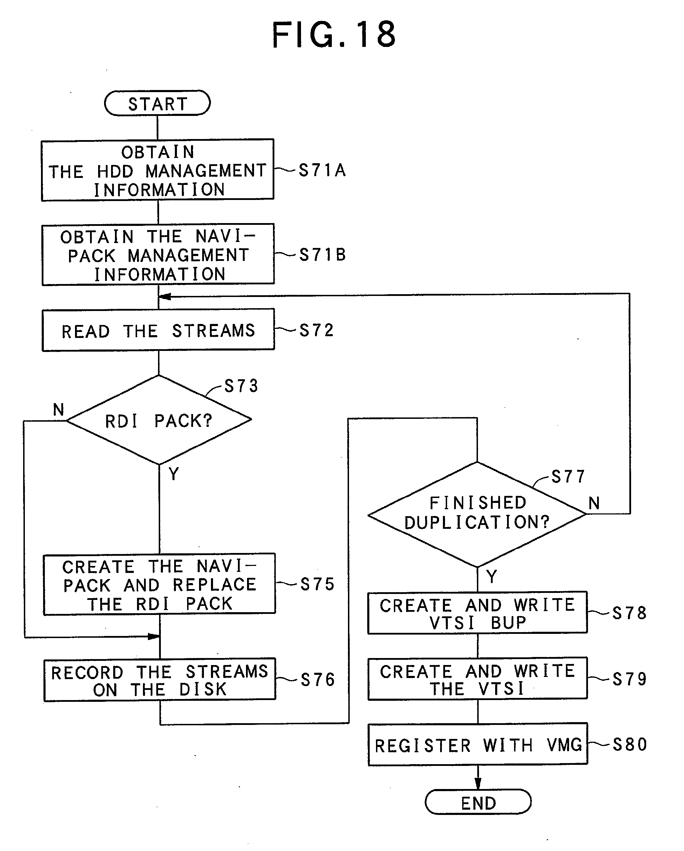

Hereafter, a description will be given by referring FIGS. 17 and 18 as to the information recording and reproducing apparatus which is a third embodiment of the information recording apparatus of the present invention. As for the third embodiment, only the portions different from the first embodiment will be described.

According to the first embodiment, the information necessary for the creation of the navi-pack is written to the area corresponding to the producer information 176 in the RDI pack 160. According to the third embodiment, however, such information is stored as the navi-pack management information on the hard disk. The navi-pack management information is stored as a separate file from the hard disk management information on the HDD 306.

FIG. 17 is a flowchart showing the processing on recording the data on the HDD 306.

In a step S61 in FIG. 17, the encoding by the format converting apparatus 307A is started.

Next, in a step S62, it waits until the encoding is finished by the format converting apparatus 307A as to one VOB unit 114 (FIG. 6), and then moves on to a step S63. In the step S63, it obtains the end address information on the first (1st) reference, end address information on the second (2nd) reference, end address information on the third (3rd) reference, and address information for synchronous reproduction from the VOB unit 114 of which encoding is finished. In the following a step S64, it registers each of the information obtained in the step S63 as the navi-pack management information. Subsequently, in a step S65, it writes to the HDD 306 the streams as to the VOB unit 114 of which encoding is finished.

Next, in a step S66, it determines whether or not the encoding is finished as to all the VOB units 114, and if the determination is denied, it returns to the step S62 and repeats the processing of the steps S62 to 65 as to the next VOB unit 114. If the determination in the step S66 is affirmed, it moves on to a step S67 to create the hard disk management information and the navi-pack management information and also writes the hard disk management information and the navi-pack management information to a predetermined area on the HDD 306 so as to finish the processing.

In the case of recording the data recorded by the video recording method on the HDD 306, the format conversion from the video method to the video recording method in the format converting portion 307b is not performed, and only the information in the information adding portion 307b is added to each VOB unit 114.

FIG. 18 is a flowchart showing the processing in the case of duplicating the data recorded on the HDD 306 on the record medium such as the DVD-RW by the video method.

In a step S71A in FIG. 18, it obtains the hard disk management information recorded on the HDD 306. Next, in a step S71B, it also obtains the navi-pack management information recorded on the HDD 306. The navi-pack management information is the information written in the step S67 (FIG. 17). Next, in a step S72, it reads the streams recorded on the HDD 306. Next, in a step S73, it determines whether or not the data equivalent to the RDI pack has been read, and if the determination is affirmed, it moves on to a step S75, and if the determination is denied, it moves on to a step S76.

In a step S75, it creates the navi-pack based on each of the information which has already been read as the navi-pack management information so as to replace the area equivalent to the RDI pack 160 with the navi-pack.

In a step S76, it records the streams read in the step S72 or the streams including the navi-pack created in the step S75 on the record medium such as the DVD-RW. Next, in a step S77, it determines whether or not all the data to be duplicated has been duplicated, and if the determination is denied, it returns to the step S72 and repeats the steps S72 to S76 for the following streams. If the determination in the step S77 is affirmed, it moves on to a step S78.

Next, in a step S78, it creates the backup data of the VTSI, and records it as a part of the control data 11 (FIG. 1) on the record medium such as the DVD-RW. Next, in a step S79, it creates the VTSI, and records it as a part of the control data 11 on the record medium such as the DVD-RW. Next, in a step S80, it records the information necessary for the video manager 2 (FIG. 1) on the record medium such as the DVD-RW so as to finish the processing.

As described above, according to this embodiment, the information necessary for the creation of the navi-pack is recorded on the HDD 306 in advance. For this reason, it is possible, when duplicating the data recorded on the HDD 306 on the DVD-RW and so on by the video method, to read the information necessary for the creation of the navi-pack from the HDD 306. Therefore, it is possible to easily and promptly duplicate the data without the necessity of the complicated processing as in the case of converting the format from the video recording method to the video method.

## Claims

1. An information recording apparatus (300) comprising:
a record medium (306) on which data is recorded; and
a recording device (307, 311) which records the data on the record medium, **characterized in that**
when recording the data on the record medium, the recording device records on the record medium first reproduction control information (160) required for reproducing the data in a first format and second reproduction control information (41) required for reproducing the data in a second format.

2. The information recording apparatus (300) according to claim 1, wherein the apparatus further comprises a first duplicating device (305, 307) and second duplicating device (305, 307) for duplicating the data recorded on the record medium (306), wherein:
the first duplicating device duplicates the data in the first format by using the first reproduction control information (160) recorded on the record medium; and
the second duplicating device duplicates the data in the second format by using the second reproduction control information (41) recorded on the record medium.

3. The information recording apparatus (300) according to claim 2, wherein the first duplicating device (305, 307) and the second duplicating device (305, 307) share the same apparatus.

4. The information recording apparatus (300) according to any one of claims 1 to 3, wherein the data comprises one or more minimum reproduction units common to the first and second formats, and the first reproduction control information (160) and the second reproduction control information (41) are provided to each of the minimum reproduction units (114) respectively.

5. The information recording apparatus (300) according to any one of claims 1 to 4, wherein the data is recorded on the record medium according to the first format.

6. The information recording apparatus (300) according to any one of claims 1 to 5, wherein the second reproduction control information (41) is stored in free space of the first reproduction control information (160) recorded on the record medium (306).

7. The information recording apparatus (300) according to any one claims 1 to 5, wherein the second reproduction control information (41) is recorded as a part of management information required for reading the data from the record medium.

8. The information recording apparatus (300) according to any one of claims 1 to 5, wherein the second reproduction control information (41) is stored on the record medium (306) as a different file from the management information required for reading the data from the record medium.

9. The information recording apparatus according to claim 1, wherein a data format usable in common to both the first and second formats is used as the data format of the data to be recorded on the record medium (306).

10. An information recording method for recording data on a record medium (306), the method comprising a recording process for recording on the record medium first reproduction control information (160) required for reproducing the data in a first format and second reproduction control information (41) required for reproducing the data in a second format is included.

11. The information recording method according to claim 10, further comprising a duplicating process for duplicating the data in the second format by using the second reproduction control information (41) recorded on the record medium (306) by the recording procedure is included.

12. The information recording method according to claim 10 or 11, wherein the data comprises one or more minimum reproduction units common to the first and second formats, and the first reproduction control information (160) and the second reproduction control information (41) are provided to each of the minimum reproduction units (114) respectively.

13. The information recording method according to any one of claims 10 to 12, wherein the data is recorded on the record medium (306) according to the first format.

14. The information recording method according to any one of claims 10 to 13, wherein the second reproduction control information (41) is stored in free space of the first reproduction control information (160) recorded on the record medium.

15. The information recording method according to any one of claims 10 to 14, wherein the second reproduction control information (41) is recorded as a part of management information required for reading the data from the record medium (306).

16. The information recording method according to any one of claims 10 to 15, wherein a data format usable in common to both the first and second formats is used as the data format of the data to be recorded on the record medium (306).
